(19) Europäisches Patentamt
European Patent Office
Office européen des brevets

(11) Veröffentlichungsnummer: **0 014 421**
**B1**

(12) # EUROPÄISCHE PATENTSCHRIFT

(45) Veröffentlichungstag der Patentschrift: **25.11.81**

(51) Int. Cl.³: **B 01 D 19/04**

(21) Anmeldenummer: **80100439.1**

(22) Anmeldetag: **29.01.80**

(54) **Antischaummittel.**

(30) Priorität: **31.01.79 DE 2903725**

(43) Veröffentlichungstag der Anmeldung: **20.08.80 Patentblatt 80/17**

(45) Bekanntmachung des Hinweises auf die Patenterteilung: **25.11.81 Patentblatt 81/47**

(84) Benannte Vertragsstaaten: **BE CH DE FR GB IT**

(56) Entgegenhaltungen:
**CH-A-610 209**
**FR-A-953 838**
**FR-A-1 415 418**
**FR-A-1 582 923**
**US-A-2 988 510**

(73) Patentinhaber: **WACKER-CHEMIE GMBH, Prinzregentenstrasse 22, D-8000 München 22 (DE)**

(72) Erfinder: **Pirson, Ewald, Dr., Dipl.-Chem., Holzfelder Weg 22, D-8263 Burghausen (DE)**
Erfinder: **Innertsberger, Ernst, Dipl.-Chem., Mehringer Strasse 56, D-8263 Burghausen (DE)**
Erfinder: **Schmidlkofer, Jakob, Ahornweg 3, D-8261 Mehring-Öd (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

Antischaummittel

Es ist bekannt, Schaum, insbesondere Schaum auf wäßrigen Medien, mittels Antischaummitteln auf Grundlage von Diorganopolysiloxan und in diesem Organopolysiloxan verteiltem festem Stoff zu verhindern oder zu vermindern (vgl. z. B. FR-A-1 582 923 — der Öffentlichkeit bekannt durch Bulletin Officiel de la Propriété Industrielle vom 10. Oktober 1969, Anmelder: Wacker-Chemie GmbH — die z. B. GB-A-1 228 799 entspricht). Es ist weiterhin bekannt, Siliciumverbindungen, die die Kohlenstoffoxygruppen und gegebenenfalls SiC-gebundene einwertige Kohlenwasserstoffreste enthalten, als Antischaummittel zu verwenden. Hierzu wird z. B. auf US-A-2 462 999, R. B. Scott/E. I. du Pont de Nemours & Company, ausgegeben 1. März 1949, US-A-2 643 240, — R. K. Walton et al./Union Carbide and Carbon Corporation, ausgegeben 23. Juni 1953 und US-A-2 416 503, Ch. E. Trautmann et al./Gulf Research & Development Company, ausgegeben 25. Februar 1947, verwiesen. Gegenüber den aus den oben genannten Druckschriften bekannten Antischaummitteln haben die erfindungsgemäßen Antischaummittel z. B. die Vorteile, daß sie leichter zugänglich sind als Diorganopolysiloxane und überraschenderweise ebenso wirksam sind wie Diorganopolysiloxane und/oder sich länger lagern lassen, ohne daß Entmischungserscheinungen auftreten und/oder wirksamer sind und/oder sich leichter mit rein-organischen Stoffen, wie Emulgatoren und/oder Alkoholen, vermischen und/oder leichter in wäßrigen Medien verteilen lassen.

Die Organopolysiloxane der Formel auf Seite 3 von CH-PS 6 102 209 gehören durch ihren Gehalt an größeren Mengen von Dimethylsiloxaneinheiten auch zu den eingangs abgehandelten Diorganopolysiloxanen und in diesen Organopolysiloxanen ist kein fester Stoff verteilt. Die erfindungsgemäßen Antischaummittel sind auch ohne Mitverwendung der in CH-PS 610 209 näher beschriebenen anionischen Tenside wirksam.

Gegenstand der Erfindung sind Antischaummittel auf Grundlage von Organopolysiloxan und in diesem Organopolysiloxan verteiltem festem Stoff, dadurch gekennzeichnet, daß sie mindestens ein eine Viskosität von mindestens 5 bis 40 $mm^2 \cdot s^{-1}$ bei 25°C und durchschnittlich mindestens 0,5 Alkoxygruppen je Si-Atom aufweisendes Organopolysiloxan, bei dem an jedes Siliciumatom ein einwertiger Kohlenwasserstoffrest SiC-gebunden ist, enthalten.

Als feste Stoffe können in den erfindungsgemäßen Antischaummitteln beliebige feste Stoffe, vielfach auch als »Füllstoffe« bezeichnet, vorliegen, die auch in den bisher bekannten Antischaummitteln auf Grundlage von Organopolysiloxan und in diesem Organopolysiloxan verteiltem festem Stoff vorliegen konnten. Beispiele für solche Füllstoffe oder feste Stoffe in Antischaummitteln auf Grundlage von Organopolysiloxan und in diesem Organopolysiloxan verteiltem festem Stoff sind Oxyde von Silicium, Magnesium oder Zink, wobei die Teilchengröße dieser Oxyde jeweils vorzugsweise höchstens 25 mikrometer beträgt, wie pyrogen erzeugtes oder gefälltes Siliciumdioxyd, Salze von Elementen der II. oder III. Gruppe des Periodensystems nach Mendeleeff mit einer Ordnungszahl von 12 bis 30 mit 12 bis 22 Kohlenstoffatome aufweisenden, aliphatischen einbasischen Carbonsäuren oder Hydroxycarbonsäuren, wie Calciumstearat und Calcium-12-hydroxystearat sowie Produkte, die mindestens bei der jeweiligen Anwendungstemperatur des Antischaummittels fest und durch Umsetzung von mindestens einem einwertigen oder mehrwertigen Isocyanat mit mindestens einer organischen Verbindung, die mindestens ein gegenüber der Isocyanatgruppe reaktionsfähiges Wasserstoffatom enthält, hergestellt worden sind, wie das Produkt der Umsetzung von Naphthylendiisocyanat mit Cyclohexylamin. Vorzugsweise ist die Herstellung der letztgenannten Art von festem Stoff in Gegenwart von in dem erfindungsgemäßen Antischaummittel vorliegenden Organopolysiloxan erfolgt. Weitere Beispiele für im Rahmen der Erfindung geeignete feste Stoffe sind Lithiumstearat, Magnesiumsilikat und Magnesiumaluminiumsilikat. Alle hier genannten anorganischen Füllstoffe können hydrophob sein, z. B. Trimethylsiloxygruppen auf ihrer Oberfläche tragen, oder hydrophil sein.

Falls erwünscht, können Gemische aus verschiedenen festen Stoffen im Organopolysiloxan verteilt sein.

Die Menge an festem Stoff, der in Organopolysiloxan verteilt ist, beträgt vorzugsweise 0,1 bis 30 Gewichtsprozent, insbesondere 0,2 bis 20 Gewichtsprozent, jeweils bezogen auf das Gewicht der Gesamtmenge von jeweils eingesetztem Organopolysiloxan.

Vorzugsweise hat erfindungsgemäß eingesetztes, durchschnittlich mindestens 0,5 Alkoxygruppen je Si-Atom aufweisendes Organopolysiloxan, bei dem an jedes Siliciumatom ein einwertiger Kohlenwasserstoffrest SiC-gebunden ist, eine Viskosität von 15 bis 30 $mm^2 \cdot s^{-1}$ bei 25°C.

Vorzugsweise enthalten die Alkoxygruppen in erfindungsgemäß eingesetztem, eine Viskosität von 5 bis 40 $mm^2 \cdot s^{-1}$ bei 25°C und durchschnittlich mindestens 0,5 Alkoxygruppen je Si-Atom aufweisendem Organopolysiloxan, bei dem an jedes Siliciumatom ein einwertiger Kohlenwasserstoffrest SiC-gebunden ist, 1 bis 4 Kohlenstoffatome, insbesondere 2 bis 3 Kohlenstoffatome, je Alkoxygruppe. Besonders bevorzugt als Alkoxygruppen sind Äthoxygruppen. Weitere geeignete Alkoxygruppen sind die Methoxy-, n-Propoxy-, Isopropoxy-, n-Butoxy-, sec.-Butoxy- und tert.-Butoxygruppe. Falls erwünscht, können verschiedene Arten von Alkoxygruppen in erfindungsgemäß eingesetztem Organopolysiloxan vorhanden sein.

Vorzugsweise enthalten die SiC-gebundenen, einwertigen Kohlenwasserstoffreste in erfindungsgemäß eingesetztem, eine Viskosität von 5 bis 40 $mm^2 \cdot s^{-1}$ bei 25° C und durchschnittlich mindestens 0,5 Alkoxygruppen je Si-Atom aufweisendem Organopolysiloxan, bei dem an jedes Siliciumatom ein einwertiger Kohlenwasserstoffrest SiC-gebunden ist, 1 bis 18 Kohlenstoffatome. Beispiele für solche Kohlenwasserstoffreste sind der Methyl-, Äthyl- und 2-Phenylpropylrest sowie Octadecylreste. Vorzugsweise sind jedoch, insbesondere wegen der leichteren Zugänglichkeit, mindestens 90% und möglichst sogar 100% der Anzahl der SiC-gebundenen, einwertigen Kohlenwasserstoffreste im erfindungsgemäß eingesetzten, eine Viskosität von 5 bis 40 $mm^2 \cdot s^{-1}$ bei 25° C und durchschnittlich mindestens 0,5 Alkoxygruppen je Si-Atom aufweisendem Organopolysiloxan Methylreste. Schließlich ist bevorzugt, daß im erfindungsgemäß eingesetzten, eine Viskosität von 5 bis 40 $mm^2 \cdot s^{-1}$ bei 25° C und durchschnittlich mindestens 0,5 Alkoxygruppen je Si-Atom aufweisendem Organopolysiloxan, bei dem an jedes Siliciumatom ein einwertiger Kohlenwasserstoffrest SiC-gebunden ist, alle nicht oder anders als durch Alkoxygruppen oder SiC-gebundene Kohlenwasserstoffreste abgesättigten Siliciumvalenzen durch Siloxansauerstoffatome abgesättigt sind, und daß durchschnittlich höchstens 1,4 Alkoxygruppen je Si-Atom vorliegen. Die bevorzugten eine Viskosität von 5 bis 40 $mm^2 \cdot s^{-1}$ bei 25° C und durchschnittlich mindestens 0,5 Alkoxygruppen je Si-Atom aufweisenden Organopolysiloxane, bei denen an jedes Siliciumatom ein einwertiger Kohlenwasserstoffrest SiC-gebunden ist, sind also aus Einheiten der Formel

$$(RO)CH_3\overset{|}{Si}O- \qquad (RO)_2CH_3SiO_{1/2}- \qquad CH_3\underset{|}{\overset{\overset{O-}{|}}{Si}}O-$$

wobei R ein Alkylrest mit 1 bis 4 Kohlenstoffatomen ist und so viele $(RO)CH_3SiO$- und $(RO)_2CH_3SiO$-Einheiten vorliegen, daß durchschnittlich 0,5 bis 1,4 Alkoxygruppen je Si-Atom vorhanden sind.

Erfindungsgemäß eingesetztes, eine Viskosität von 5 bis 40 $mm^2 \cdot s^{-1}$ bei 25° C und durchschnittlich mindestens 0,5 Alkoxygruppen je Si-Atom aufweisendes Organopolysiloxan, bei dem an jedes Siliciumatom ein einwertiger Kohlenwasserstoffrest SiC-gebunden ist, kann linear, cyclisch und/oder verzweigt sein.

Die Herstellung von erfindungsgemäß eingesetztem, eine Viskosität von 5 bis 40 $mm^2 \cdot s^{-1}$ bei 25° C und durchschnittlich mindestens 0,5 Alkoxygruppen je Si-Atom aufweisendem Organopolysiloxan, bei dem an jedes Siliciumatom ein einwertiger Kohlenwasserstoffrest SiC-gebunden ist, kann in bekannter bzw. an sich bekannter Weise durch Umsetzung von z. B. Methyltrichlorsilan mit z. B. einem Gemisch aus Äthanol und Wasser in zur Erzielung der gewünschten Viskosität des Organopolysiloxans gewählter Menge oder durch Hydrolyse von z. B. Methyltriäthoxysilan mit einem Gemisch aus Äthanol und Wasser in zur Erzielung der gewünschten Viskosität des Organopolysiloxans gewählter Menge, jeweils gegebenenfalls in Gegenwart von Hydrolyse- oder Kondensationskatalysator, wie Salzsäure, erfolgen.

Zusätzlich zu einer Viskosität von 5 bis 40 $mm^2 \cdot s^{-1}$ bei 25° C und durchschnittlich mindestens 0,5 Alkoxygruppen je Si-Atom aufweisendem Organopolysiloxan, bei dem an jedes Siliciumatom ein einwertiger Kohlenwasserstoffrest SiC-gebunden ist, und mehr oder weniger feinteiligem festem Stoff können bei der Bereitung der erfindungsgemäßen Antischaummittel Stoffe eingesetzt werden, die auch bisher bei der Bereitung von Antischaummitteln auf Grundlage von entschäumend wirkendem Organopolysiloxan und in diesem Organopolysiloxan verteiltem festem Stoff verwendet werden konnten. Beispiele für solche in den erfindungsgemäßen Antischaummitteln zusätzlich möglicherweise vorliegenden Stoffe sind andere entschäumend wirkende Organopolysiloxane, wie durch Trimethylsiloxygruppen endblockierte Dimethylpolysiloxane, andere wasserunlösliche Flüssigkeiten als entschäumende wirkende Organopolysiloxane, wie Mineralöle, pflanzliche Öle, Orthosphorsäureester, Ester aus Carbonsäuren und einwertigen Alkoholen, z. B. Isopropylmyristinat, Adipinsäure-n-butylester, Di-n-butylsebacat, Tridecylstearat, Isooctadecylstearat und Adipinsäuredi-2-äthylhexylester. Weiterhin können die erfindungsgemäßen Antischaummittel im Gemisch mit Alkanolen mit 2 bis 18 Kohlenstoffatomen, wie Äthanol, Isopropanol, Isobutanol, 2-Äthylhexanol oder Isotridecylalkohol oder Gemischen aus solchen Alkanolen, vorliegen.

Ebenfalls weiterhin können die erfindungsgemäßen Antischaummittel auch im Gemisch mit Emulgator und/oder Schutzkolloid vorliegen. Beispiele für geeignete Emulgatoren sind insbesondere nichtionogene Emulgatoren, wie Anlagerungsprodukte von Äthylenoxyd an Alkohole, Phenole, Carbonsäuren oder Amine, z. B. Isotridecylpolyoxyäthylenglykoläther, Stearylpolyoxyäthylenglykoläther, Cetylpolyoxyäthylenglykoläther, Trimethylnonylpolyoxyäthylenglykoläther oder Nonylphenolpolyoxyäthylenglykoläther und Sorbitanmonostearat. Weitere Beispiele für geeignete Emulgatoren sind anionaktive Emulgatoren, wie Sulfonate und Salze von Sulfosäuren einschließlich Salzen von Estern aliphatischer Carbonsäuren, die mindestens 9 Kohlenstoffatome aufweisen, mit Isäthionsäure, z. B. dem Natriumsalz von Stearoylisäthionsäure. Beispiele für geeignete Schutzkolloide sind Polyvinylalkohole, die bis zu 40 Molprozent Acylgruppen, insbesondere Acetylgruppen, enthalten

können, Methylcellulose und Natriumcarboxyäthylcellulose. Ein Beispiel für eine Kombination aus Emulgator und Schutzkolloid ist die Kombination aus natriumcarboxyäthylcellulose und dem Natriumsalz von Stearoylisäthionsäure. Liegen die erfindungsgemäßen Antischaummittel im Gemisch mit Emulgator und/oder Schutzkolloid vor, so beträgt der Anteil der Gesamtmenge an Emulgator und Schutzkolloid am Gesamtgewicht aller Bestandteile der Gemische vorzugsweise 1 bis 20 Gewichtsprozent, insbesondere 8 bis 12 Gewichtsprozent.

Abgesehen von der oben erwähnten Herstellung von Umsetzungsprodukt von Isocyanat mit einer organischen Verbindung, die mindestens ein gegenüber der Isocyanatgruppe reaktionsfähiges Wasserstoffatom enthält, in Gegenwart von in dem erfindungsgemäßen Antischaummittel vorliegendem Organopolysiloxan, können die erfindungsgemäßen Antischaummittel durch einfaches Vermischen von eine Viskosität von 5 bis 40 $mm^2 \cdot s^{-1}$ bei 25°C und durchschnittlich mindestens 0,5 Alkoxygruppen je Si-Atom aufweisendem Organopolysiloxan, bei dem an jedes Siliciumatom ein einwertiger Kohlenwasserstoffrest SiC-gebunden ist, in diesem Organopolysiloxan zu verteilendem festem Stoff und der gegebenenfalls mitverwendeten weiteren Stoffe in beliebiger Reihenfolge hergestellt werden. Dabei ist auch bei der Mitverwendung von Emulgator, insbesondere flüssigem Emulgator, keinerlei Mitverwendung von Wasser zur gesonderten Herstellung einer Emulsion erforderlich.

## Beispiel 1

In einem Mischrührwerk werden 5 kg eines durchschnittlich etwa eine Äthoxygruppe je Si-Atom aufweisenden Organopolysiloxans, bei dem an jedes Siliciumatom ein Methylrest SiC-gebunden ist, und alle anders als durch Äthoxygruppen und SiC-gebundene Methylreste abgesättigten Siliciumvalenzen durch Siloxansauerstoffatome abgesättigt sind, mit einer Viskosität von 25 $mm^2 \cdot s^{-1}$ bei 25°C und 4 kg pyrogen in der Gasphase erzeugtes Siliciumdioxyd mit einer BET-Oberfläche von 200 $m^2/g$ innerhalb von 30 Minuten miteinander vermischt. Es wird eine weiche Paste erhalten, die auch nach Lagerung von mehr als 4 Wochen keine Veränderung zeigt.

## Beispiel 2

Die in Beispiel 1 beschriebene Arbeitsweise wird wiederholt mit der Abänderung, daß anstelle der 4 kg des gemäß Beispiel 1 verwendeten lipophilen Siliciumdioxyds 4 kg eines durch Behandlung mit Trimethylchlorsilan hydrophob gemachten Siliciumdioxyds mit einer BET-Oberfläche von 150 $m^2/g$ eingesetzt werden. Es wird eine dickflüssige Masse erhalten, die auch nach Lagerung von mehr als 4 Wochen keine Veränderung zeigt.

## Beispiel 3

In einem 1-l-Rundkolben mit Flügelrührer wird unter Rühren ein Gemisch aus 780 g eines durchschnittlich etwa eine Äthoxygruppe je Si-Atom aufweisenden Organopolysiloxans, bei dem an jedes Siliciumatom ein Methylrest SiC-gebunden ist und alle anders als durch Äthoxygruppen und SiC-gebundene Methylreste abgesättigten Siliciumvalenzen durch Siloxansauerstoffatome abgesättigt sind, mit einer Viskosität von 15 $mm^2 \cdot s^{-1}$ bei 25°C und 11 g Naphthylendiisocyanat auf 150°C erwärmt. In die so erhaltene Mischung werden unter Rühren langsam 11,5 g Cyclohexylamin gegeben. Nach dem Abkühlen liegt eine weiße Dispersion von festen Teilchen mit einer Größe von unter 25 mikrometer im Organopolysiloxan vor, die auch nach Lagerung von mehr als 4 Wochen keine Veränderung zeigt.

## Vergleichsversuch a

Die in Beispiel 1 beschriebene Arbeitsweise wird wiederholt mit der Abänderung, daß anstelle der 5 kg des Organopolysiloxans 5 kg Methyltriäthoxysilan eingesetzt werden. Es wird eine Flüssigkeit erhalten, die sich innerhalb von höchstens 6 Stunden entmischt.

## Vergleichsversuch b

Die in Beispiel 2 beschriebene Arbeitsweise wird wiederholt mit der Abänderung, daß anstelle der 5 kg des Organopolysiloxans 5 kg Methyltriäthoxysilan eingesetzt werden. Es wird eine Flüssigkeit erhalten, die sich innerhalb von höchstens 6 Stunden entmischt.

Vergleichsversuch c

Um zu beweisen, daß die erfindungsgemäß eingesetzten Organopolysiloxane überraschenderweise ebenso wirksam sind wie Diorganopolysiloxane, wird die in Beispiel 1 beschriebene Arbeitsweise wiederholt mit der Abänderung, daß anstelle der 5 kg des dort verwendeten Organopolysiloxans 5 kg eines durch Trimethylsiloxygruppen endblockierten Dimethylpolysiloxans mit einer Viskosität von 100 $mm^2 \cdot s^{-1}$ bei 25°C eingesetzt werden. Es wird eine dickflüssige Masse erhalten, die auch nach Lagerung von mehr als 4 Wochen keine Veränderung zeigt.

Prüfung der nach den Beispielen und Vergleichsversuchen erhaltenen Mischungen auf Wirksamkeit als Antischaummittel

In einen 500-ml-Stehkolben werden 400 ml einer 4 Gewichtsprozent Natriumlaurylsulfat enthaltenden wäßrigen Lösung gegeben. Dann wird der Kolben mit einem Stopfen verschlossen und zehnmal geschüttelt, wonach er völlig mit Schaum gefüllt ist. Von den Mischungen, die gemäß den Beispielen und dem Vergleichsversuch c, wobei letztere Mischung mit etwas Toluol verdünnt wurde, hergestellt wurden, genügen jeweils 80 mg, um den Schaum in kurzer Zeit zu zerstören. Von den Mischungen, die gemäß Vergleichsversuch a und Vergleichsversuch b hergestellt wurden, werden zur Erzielung der gleichen Wirkung 1,3 g benötigt.

Beispiel 4

1 kg der gemäß Beispiel 1 hergestellten Mischung wird mit 90 g Isotridecylpolyoxyäthylenglykoläther vermischt. Die so erhaltene, völlig homogene Mischung zeigt auch nach mehr als 4 Wochen Lagerung keine Veränderung. Bei Zugabe zu einer stark schäumenden wäßrigen Lösung wird die Mischung sofort fein dispergiert unter gleichzeitiger Zerstörung des Schaums.

Die gemäß den Beispielen und Vergleichsversuchen eingesetzten Äthoxygruppen und SiC-gebundene Methylreste enthaltenden Organopolysiloxane wurden hergestellt wie folgt:

a) Zu 1,5 kg Methyltriäthoxysilan, das auf 90°C erwärmt ist, wurde unter Rühren ein Gemisch aus 80 g Äthanol, 120 ml Wasser und 0,8 ml konzentrierte Salzsäure tropfenweise gegeben. Gleichzeitig und innerhalb insgesamt 1,5 Stunden wurde unter weiterem Rühren Äthanol abdestilliert. Der Rückstand wurde durch Einleiten von Ammoniak neutralisiert und dann filtriert. Es wurde eine klare Flüssigkeit mit einer Viskosität von 25 $mm^2 \cdot s^{-1}$ bei 25°C erhalten.
b) Die vorstehend unter a) beschriebene Arbeitsweise wurde wiederholt mit der Abänderung, daß 100 ml Wasser anstelle der 120 ml Wasser eingesetzt werden. Es wurde eine klare Flüssigkeit mit einer Viskosität von 15 $mm^2 \cdot s^{-1}$ bei 25°C erhalten.

**Patentansprüche**

1. Antischaummittel auf Grundlage von Organopolysiloxan und in diesem Organopolysiloxan verteiltem festem Stoff, dadurch gekennzeichnet, daß sie mindestens ein eine Viskosität von 5 bis 40 $mm^2 \cdot s^{-1}$ bei 25°C und durchschnittlich mindestens 0,5 Alkoxygruppe je Si-Atom aufweisendes Organopolysiloxan, bei dem an jedes Siliciumatom ein einwertiger Kohlenwasserstoffrest SiC-gebunden ist, enthalten.

2. Antischaummittel nach Anspruch 1, dadurch gekennzeichnet, daß der einwertige, SiC-gebundene Kohlenwasserstoffrest der Methylrest ist.

**Claims**

1. Antifoam agents based on organopolysiloxanes with solid substances dispersed therein, characterized in that they contain at least one organopolysiloxane having a viscosity of from 5 to 40 $mm^2 \cdot s^{-1}$ at 25°C and, on average, at least 0.5 alkoxy groups per Si atom and in which a monovalent hydrocarbon radical is SiC-bonded to each silicon atom.

2. Antifoam agents according to claim 1, characterized in that the monovalent SiC-bonded hydrocarbon radical is a methyl radical.

**Revendications**

1. Agents antimousses à base de polyorganosiloxane et d'une substance solide dispersée dans ce polyorganosiloxane, caractérisés en ce qu'ils contiennent au moins un polyorganosiloxane présentant une viscosité de 5 à 40 $mm^2 \cdot s^{-1}$ à 25°C et contenant en moyenne au moins 0,5 groupe alcoxy par atome de Si, dans lequel un radical hydrocarboné monovalent est lié par une liaison SiC à chaque atome de Si.

2. Agents antimousses suivant la revendication 1, caractérisés en ce que le radical hydrocarboné monovalent, lié une liaison SiC, est le radical méthyle.